# EUROPEAN PATENT APPLICATION

(11) **EP 1 699 215 A1**
(43) Date of publication of application: **06.09.2006**
(21) Application number: 04820692.4
(22) Date of filing: 10.12.2004
(51) Int. Cl.: H04M 1/66, H04M 1/00, H04L 9/32

(54) **VOICE AUTHENTICATION DEVICE, VOICE AUTHENTICATION SYSTEM, AND VOICE AUTHENTICATION METHOD**

(30) Priority: 22.12.2003 JP 2003424629
(71) Applicant: Matsushita Electric Industries Co., Ltd., Kadoma-shi, Osaka 571-8501 (JP)
(72) Inventor: SUMASU, Atsushi c/o Matsushita El.Ind.Co.Ltd., 1-3-7 Shiromi, Chuo ku, Osaka 540-6319 (JP)
(74) Representative: Grünecker, Kinkeldey, Stockmair & Schwanhäusser Anwaltssozietät
(86) International application number: PCT/JP2004/018474
(87) International publication number: WO 2005/062589

(57) **Abstract**

A voice authentication apparatus capable of reliably performing personal identification based on a communicating party' s voice of an incoming call between communication terminal apparatus and preventing communication with ill-intentioned people. In this apparatus, when the communicating party is specified through key operation of user specification input section 201, a user specification signal is outputted to voice data sample storage section 202. At communication section 205, a received voice signal received from mobile telephone apparatus 100 is outputted to voice verification section 203. Voice data sample storage section 202 reads the corresponding voice sample data according to the user specification signal inputted from user specification input section 201 and output as a corresponding sample signal to voice verification section 203. Voice verification section 203 verifies the received voice signal inputted from communication section 205 against the corresponding sample signal inputted from voice data sample storage section 202 and outputs the verification result as a verification result signal to display section 204.

## Description

### Technical Field

The present invention relates to a voice authentication apparatus, voice authentication system and voice authentication method for recognizing a speaker's voice and authenticating the speaker.

### Background Art

Conventionally, as a technology for identifying the communicating party with a mobile telephone, there is, for example, a technology which uses an application installed in a portable terminal that displays the communicating party's telephone number when an incoming call arrives and, if it is a registered telephone number, displays the communicating party' s name or specific image or plays a specific ringing melody.

Furthermore, as a conventional technology for personal authentication of the communicating party, there is, for example, a personal authentication system and personal authentication apparatus in mobile communication disclosed in Patent Document 1. With this system and apparatus, every time personal authentication is performed when a server at a control center provides service to a portable terminal, the server transmits predetermined text information to the portable terminal, and personal authentication is performed with voice generated by a user of the portable terminal according to this text information so as to prevent spoofing by a third party.
Patent Document 1: Japanese Patent Application Laid-Open No.2003-87860

### Disclosure of Invention

### Problems to be Solved by the Invention

However, in the case of identifying the communicating party using the conventional application, the identification of the communicating party relies on a display of the communicating party's telephone number and the user' s recognition of the communicating party' s voice, and therefore there is a problem that even a call from an unknown telephone number (not stored in the mobile telephone) must be judged based on only voice if the caller refers to himself/herself as a family member or acquaintance, and the user may suffer damage from an ill-intentioned person.

Furthermore, in the case of a personal authentication system and personal authentication apparatus in mobile communication, personal authentication is performed by only verifying the voice generated by the portable terminal user according to predetermined text information transmitted from the server against the registered user's voice every time personal authentication is performed, and therefore personal authentication is possible only between the server and portable terminal, and personal authentication of the communicating party is not possible between communication terminals, and therefore it is not possible to prevent communication with ill-intentioned people.

It is an object of the present invention to provide a voice authentication apparatus, voice authentication system and voice authentication method capable of sampling arbitrary voice of the communicating party of the incoming call, performing personal identification through personal authentication and reliably recognizing whether the communicating party of the incoming call is the person himself/herself or not and thus preventing communication with ill-intentioned people.

### Means for Solving the Problem

The voice authentication apparatus of the present invention is a voice authentication apparatus mounted on a communication terminal apparatus, having a storage section that stores a voice sample for each of a plurality of communicating parties, a specification section that specifies the communicating party of an incoming call, a verification section that reads the voice sample of the communicating party specified by the specification section from the storage section, verifies the received voice of the communicating party against the voice sample and outputs the verification result and a reporting section that reports the verification result outputted from the verification section.

### Advantageous Effect of the Invention

According to the present invention, it is possible to reliably perform personal identification between communication terminal apparatus based on a communicating party's voice of an incoming call and prevent communication with ill-intentioned people.

### Brief Description of Drawings

FIG.1 illustrates the configuration of a mobile telephone system according to Embodiment 1 of the present invention;
FIG.2 is a block diagram showing the internal configuration of a mobile telephone apparatus according to this Embodiment 1;
FIG.3 illustrates the configuration of a mobile telephone system according to Embodiment 2 of the present invention;
FIG.4 is a block diagram showing the internal configuration of the mobile telephone apparatus and remote terminal apparatus according to this Embodiment 2;
FIG.5 illustrates the configuration of a mobile telephone system according to Embodiment 3 of the present invention;
FIG.6 is a block diagram showing the internal configuration of the mobile telephone apparatus and remote terminal apparatus according to this Embodiment 3;
FIG. 7 shows the configuration of a mobile telephone system according to Embodiment 4 of the present invention; and
FIG.8 is a block diagram showing the internal configuration of the mobile telephone apparatus and remote terminal apparatus according to this Embodiment 4.

### Best Mode for Carrying Out the Invention

Now, embodiments of the present invention will be described below in detail with reference to the accompanying drawings.

### (Embodiment 1)

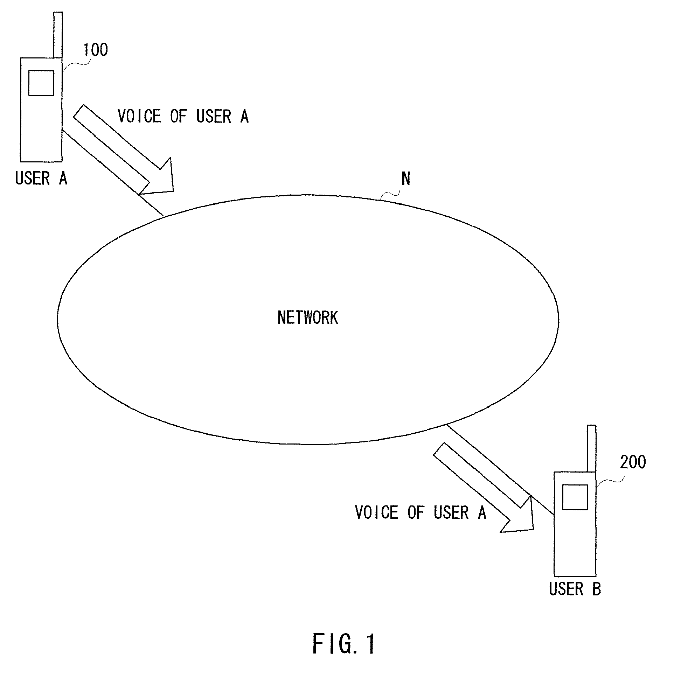

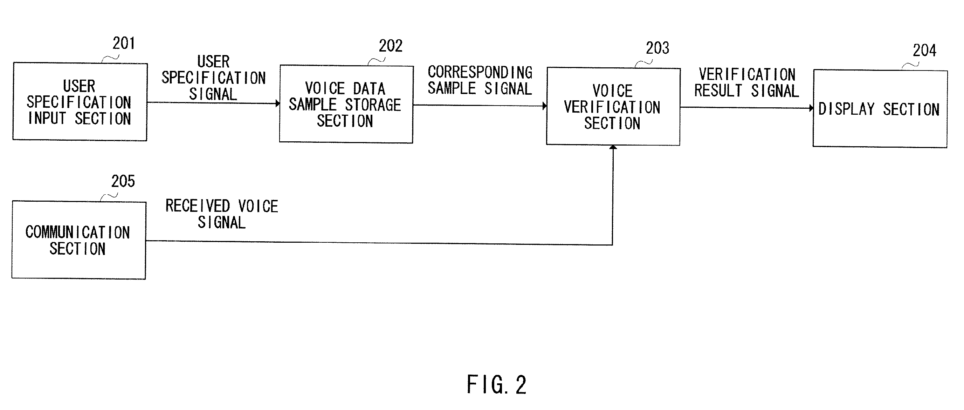

This Embodiment 1 will explain a case where the communication terminal apparatus of the present invention is applied to a mobile telephone apparatus. FIG.1 illustrates the configuration of a mobile telephone system according to this Embodiment 1, and FIG.2 is a block diagram showing a voice authentication function mounted on a mobile telephone apparatus.

The mobile telephone system in FIG.1 shows a case where mobile telephone apparatus 100 of user A on the transmitting side and mobile telephone apparatus 200 of user B on the receiving side are connected via network N. In this case, the configuration of a radio base station or the like necessary for the mobile telephone system is omitted.

FIG.2 is a block diagram mainly showing the voice authentication function which is mounted on mobile telephone apparatus 200 and mainly configured with user specification input section 201, voice data sample storage section 202, voice verification section 203, display section 204 and communication section 205.

User specification input section 201 is provided with an operation key for user B to specify the communicating party (user A in this case) when a conversation starts after a call arrives, and outputs a user specification signal (including, for example, name and registered number registered in a telephone directory) to voice data sample storage section 202. User specification may also be inputted with voice in addition to the operation key.

Voice data sample storage section 202 is a memory that stores voice sample data of a plurality of communicating parties in association with identification information about the communicating parties (e.g., names and registered numbers registered in a telephone directory) and in this case, suppose the voice sample data of user A is storedbeforehand. Timing at which voice sample data is stored may be arbitrary timing according to a storage instruction by user B. By making it possible to specify the timing for storing voice sample data arbitrarily, it is possible to store arbitrary voice as voice sample data without causing the communicating party to take time and trouble registering voice samples. Voice data sample storage section 202 reads corresponding voice sample data according to the user specification signal (including, for example, name and registered number registered in a telephone directory) inputted from user specification input section 201 and outputs the voice sample data to voice verification section 203 as the corresponding sample signal.

Voice verification section 203 verifies a received voice signal inputted from communication section 205 against the corresponding sample signal inputted from voice data sample storage section 202 and outputs the verification result as a verification result signal to display section 204. Voice verification section 203 verifies the waveform characteristic or the like of the received voice signal against the corresponding sample signal and outputs a verification result signal (e.g., OK, NG) which indicates whether the communicating party is the person himself/herself or not according to the degree of similarity or the like.

Display section 204 is configured with a liquid crystal display panel or the like, displays "OK" or "NG" as the authentication result from the verification result signal (e.g., OK, NG) inputted from voice verification section 203 and reports to user B whether the communicating party is the person himself/herself or not.

Communication section 205 has a communication function that supports a mobile telephone system, carries out transmission/reception of communication commands that support the mobile telephone system and transmission/reception of voice signals to/from mobile telephone apparatus 100 via network N and outputs the received voice signal to voice verification section 203.

Next, the operation of mobile telephone apparatus 200 will be explained with reference to FIG.1 and FIG.2.

User A transmits a signal from mobile telephone apparatus 100 to mobile telephone apparatus 200 of user B, the signal arrives at mobile telephone apparatus 200 of user B via network N, user B performs an off-hook operation according to a report of the incoming call, and then a conversation with user A starts. At this time, immediately after starting the conversation, when user B hears the voice of user A and specifies user A through key operation of user specification input section 201, a user specification signal specifying user A (including, for example, name and registered number registered in a telephone directory) is outputted to voice data sample storage section 202. Furthermore, communication section 205 outputs the received voice signal received frommobile telephone apparatus 100 of user A to voice verification section 203.

Voice data sample storage section 202 reads voice sample data corresponding to user A according to the user specification signal (including, for example, name and registered number registered in a telephone directory) inputted from user specification input section 201 and outputs the voice sample data as the corresponding sample signal to voice verification section 203. Voice verification section 203 verifies the received voice signal inputted from communication section 205 against the corresponding sample signal of user A inputted from voice data sample storage section 202 and outputs the verification result as a verification result signal to display section 204.

Display section 204 displays "OK" or "NG" as the authentication result from the verification result signal (e.g., OK, NG) inputted from voice verification section 203 and reports to user B whether user A who is the communicating party is the person himself/herself or not. As a result, user B can immediately decide whether to continue or discontinue the conversation from the authentication result displayed on display section 204.

As described above, since mobile telephone apparatus 200 of this Embodiment 1 is provided with a voice authentication function for authenticating whether the communicating party is the person himself/herself or not based on the communicating party's voice, it is possible to reliably perform personal authentication of the communicating party in a conversation between mobile telephone apparatus, prevent communication with ill-intentioned people and reliably prevent damages by spoofing or the like.

In addition, the above described embodiment has explained the case where mobile telephone apparatus 200 is provided with the voice authentication function, but mobile telephone apparatus 100 may also be provided with that function. Furthermore, this function may be provided not only for a mobile telephone apparatus but also for a fixed-line phone apparatus and other communication terminal apparatus having a telephone function.

On the other hand, when the voice verification result is "NG", information about user A (including, for example, name and telephone number registered in a telephone directory) and alarm information including the fact that user A is not the person himself/herself may be automatically reported to an external security organization such as the police or a security company registered in mobile telephone apparatus 200 using the voice verification result "NG" as a trigger. In this case, it is possible to make use of the voice authentication function applied to the mobile telephone apparatus for crime prevention and improve the reliability of the mobile telephone apparatus. Furthermore, when the voice verification result is "NG", if the conversation with the communicating party is automatically recorded, it is possible to easily use the recorded content as evidence when the conversation is a criminal act.

### (Embodiment 2)

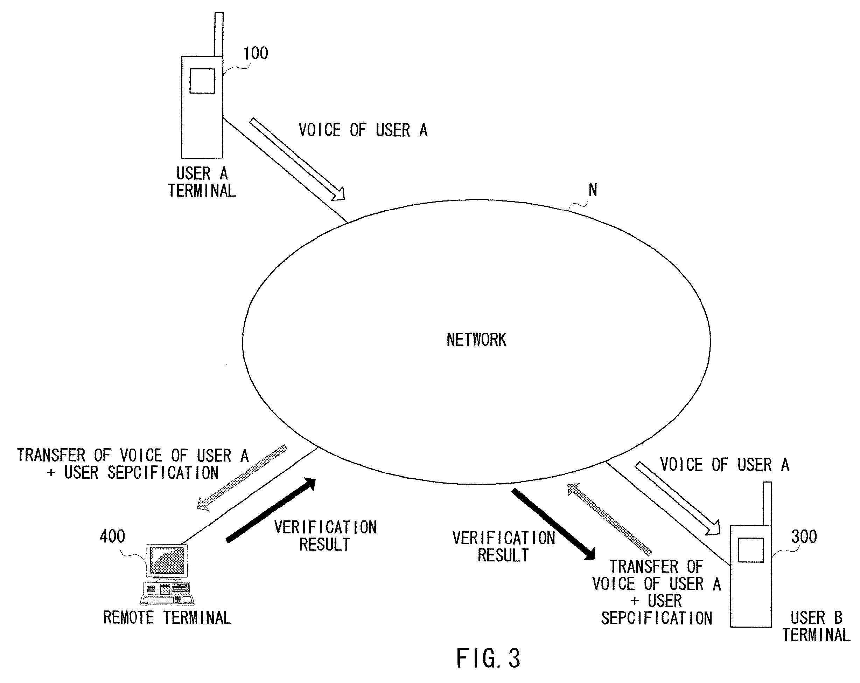

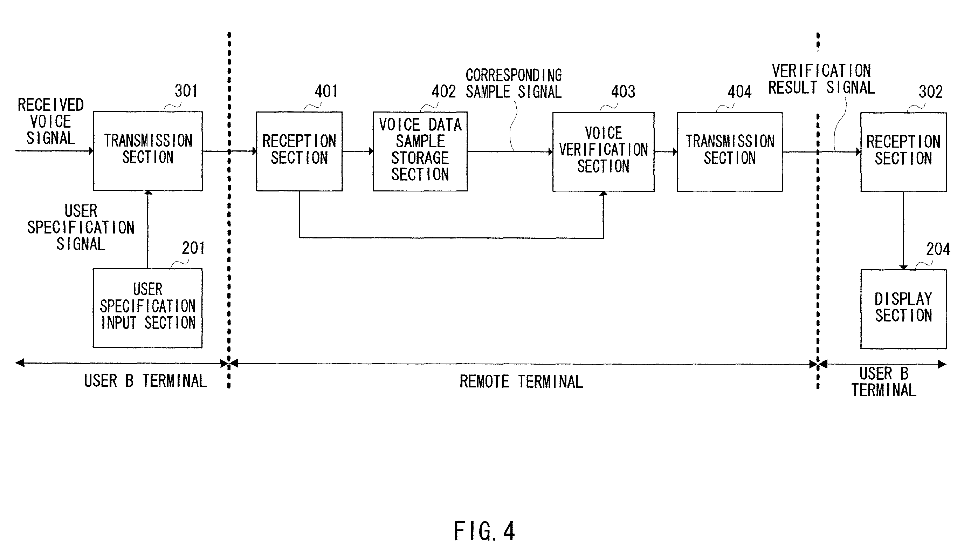

This Embodiment 2 will explain a case where the voice authentication system of the present invention is applied to a mobile telephone system. FIG.3 shows the system configuration of a mobile telephone system according to Embodiment 2 of the present invention, and FIG.4 is a block diagram showing the voice authentication function mounted on a mobile telephone apparatus and remote terminal apparatus.

The mobile telephone system in FIG.3 shows a case where mobile telephone apparatus 100 of user A on the transmitting side, mobile telephone apparatus 300 of user B on the receiving side and remote terminal apparatus 400 are connected via network N. In this case, the configuration of a radio base station or the like necessary for the mobile telephone system is omitted.

FIG.4 is a block diagram mainly showing the voice authentication function mounted on mobile telephone apparatus 300 and remote terminal apparatus 400, and the same components as those in mobile telephone apparatus 200 shown in FIG. 2 are assigned the same reference numerals and explanations thereof will be omitted. Mobile telephone apparatus 300 is mainly configured with user specification input section 201, transmission section 301, reception section 302 and display section 204. Remote terminal apparatus 400 is mainly configured with reception section 401, voice data sample storage section 402, voice verification section 403 and transmission section 404. In addition, in mobile telephone apparatus 300 and remote terminal apparatus 400, when communication is performed between mobile telephone apparatus 300 and remote terminal apparatus 400, suppose that a key for encrypting and decrypting information to be transmitted/received is stored in transmission section 301 and reception section 302, and reception section 401 and transmission section 404, respectively.

Transmission section 301 encrypts a received voice signal received by reception section 302 frommobile telephone apparatus 100 of user A and a user specification signal (including, for example, name and registered number registered in a telephone directory) inputted from user specification input section 201 using the above described key and transmits the encrypted signals as an encrypted file to remote terminal apparatus 400 via network N.

Reception section 302 receives the voice signal transmitted from mobile telephone apparatus 100 of user A via network N, outputs the received voice signal to transmission section 301, also receives the encrypted file (including the verification result) transmitted from remote terminal apparatus 400 via network N, decrypts the verification result from the encrypted file using the above described key and outputs the decrypted verification result to display section 204.

Next, the configuration of remote terminal apparatus 400 will be explained. Reception section 401 receives the encrypted file (including the received voice signal and user specification signal) transmitted from mobile telephone apparatus 300 of user B via network N, decrypts the received voice signal and user specification signal from the encrypted file using the above described key, and outputs the user specification signal to voice data sample storage section 402 and outputs the received voice signal to voice verification section 403.

Voice data sample storage section 402 is a memory that stores voice sample data of a plurality of communicating parties of user B in association with identification information (e.g., names and registered numbers registered in a telephone directory) of the communicating parties, and in this case suppose that the voice sample data of user A is stored beforehand. The timing at which voice sample data is storedmaybe arbitrary timing according to a storage instruction by user B. By making it possible to specify the timing for storing voice sample data arbitrarily, it is possible to store arbitrary voice as voice sample data without causing the communicating party to take time and trouble registering the voice samples. When the user specification signal (including, for example, name and registered number registered in a telephone directory) is inputted from reception section 401, voice data sample storage section 402 reads the corresponding voice sample data and outputs the corresponding voice sample data as the corresponding sample signal to voice verification section 403.

Voice verification section 403 verifies the received voice signal inputted from reception section 401 against the corresponding sample signal inputted from voice data sample storage section 402 and outputs the verification result as a verification result signal to transmission section 404. Voice verification section 403 verifies the waveform characteristic or the like of the received voice signal against the corresponding sample signal and outputs a verification result signal (e.g., OK, NG) indicating whether the communicating party is the person himself/herself or not based on the degree of similarity or the like.

Transmission section 404 encrypts the verification result signal inputted from voice verification section 403 using the above described key and transmits the encrypted signal as an encrypted file to mobile telephone apparatus 300 via network N.

Next, the operations of mobile telephone apparatus 300 and remote terminal apparatus 400 will be explained with reference to FIG.3 and FIG.4.

User A transmits a signal from mobile telephone apparatus 100 to mobile telephone apparatus 300 of user B, the signal arrives at mobile telephone apparatus 300 of user B via network N, user B performs an off-hook operation according to a report of the incoming call, and then a conversation with user A starts. At this time, immediately after starting the conversation, when user B hears the voice of user A and specifies user A through key operation of user specification input section 201, a user specification signal that specifies user A (including, for example, name and registered number registered in a telephone directory) is outputted to transmission section 301. Furthermore, when a user specification signal is inputted from user specification input section 201 and a received voice signal received by reception section 302 from mobile telephone apparatus 100 of user A is inputted, transmission section 301 encrypts the user specification signal and received voice signal using the above described key and transmits the encrypted signals as an encrypted file to remote terminal apparatus 400 via network N.

Reception section 401 of remote terminal apparatus 400 receives the encrypted file (including the received voice signal and user specification signal) transmitted from mobile telephone apparatus 300 of user B via network N, decrypts the received voice signal and user specification signal from the encrypted file using the above described key, outputs the user specification signal to voice data sample storage section 402 and also outputs the received voice signal to voice verification section 403.

Voice data sample storage section 402 reads the voice sample data corresponding to user A according to the user specification signal (including, for example, name and registered number registered in a telephone directory) inputted from reception section 401 and outputs the voice sample data as a corresponding sample signal to voice verification section 403. Voice verification section 403 verifies the received voice signal inputted from reception section 401 against the corresponding sample signal of user A inputted from voice data sample storage section 402 and outputs the verification result as a verification result signal to transmission section 404.

Transmission section 404 encrypts the verification result signal inputted from voice verification section 403 using the above described key and transmits the encrypted signal as an encrypted file to mobile telephone apparatus 300 via network N. Reception section 302 of mobile telephone apparatus 300 receives the encrypted file transmitted from remote terminal apparatus 400 via network N, decrypts the verification result signal from the encrypted file using the above described key and outputs the verification result signal to display section 204.

Display section 204 displays "OK" or "NG" from the verification result signal (e.g., OK, NG) inputted from reception section 302 as an authentication result and reports to user B whether user A who is the communicating party is the person himself/herself or not. As a result, user B can immediately decide whether to continue or discontinue the conversation from the authentication result displayed on display section 204.

As described above, in the mobile telephone system of this Embodiment 2, remote terminal apparatus 400 is provided with the voice authentication function for authenticating whether the communicating party is the person himself/herself or not based on the communicating party's voice, and therefore it is possible to reliably perform personal authentication of the communicating party in a conversation between mobile telephone apparatus, prevent communication with ill-intentioned people and reliably prevent damages by spoofing or the like.

Furthermore, when communication between mobile telephone apparatus 300 and remote terminal apparatus 400 is performed, information is encrypted when transmitted/received, and therefore it is possible to prevent the information content from leaking out to a third party and improve reliability of the mobile telephone system. Furthermore, when the voice verification result is "NG", information about user A (including, for example, name and telephone number registered in a telephone directory) and alarm information including the fact that user A is not the person himself/herself may be automatically reported to an external security organization such as the police or a security company registered in mobile telephone apparatus 400 using the voice verification result "NG" as a trigger. In this case, it is possible to make use of the mobile telephone system for crime prevention and further improve the reliability of the mobile telephone system. Furthermore, when the voice verification result is "NG", if the conversation with the communicating party is automatically recorded in the mobile telephone apparatus, it is possible to easily use the recorded content as evidence when the conversation is a criminal act.

Furthermore, since the voice samples and voice verification function are provided on the remote terminal apparatus side, it is possible to facilitate upgrade of the voice verification function and storage of the voice sample, and also maintain reduction in size and weight of the mobile telephone apparatus without substantially using resources of the mobile telephone apparatus. Furthermore, the remote terminal apparatus may be provided by user B himself/herself or already provided by another person or company or the like. For example, when user A refers to himself/herself as an "employee of company C", user B can also make a remote terminal apparatus of company C perform voice verification. In this way, even in the case of a conversation with an unknown communicating party (with no voice sample data), the identity of user A is guaranteed by company C and it is possible to provide a voice authentication service between mobile telephone apparatus not only between individuals but also between employees of a company or between a company and individuals.

### (Embodiment 3)

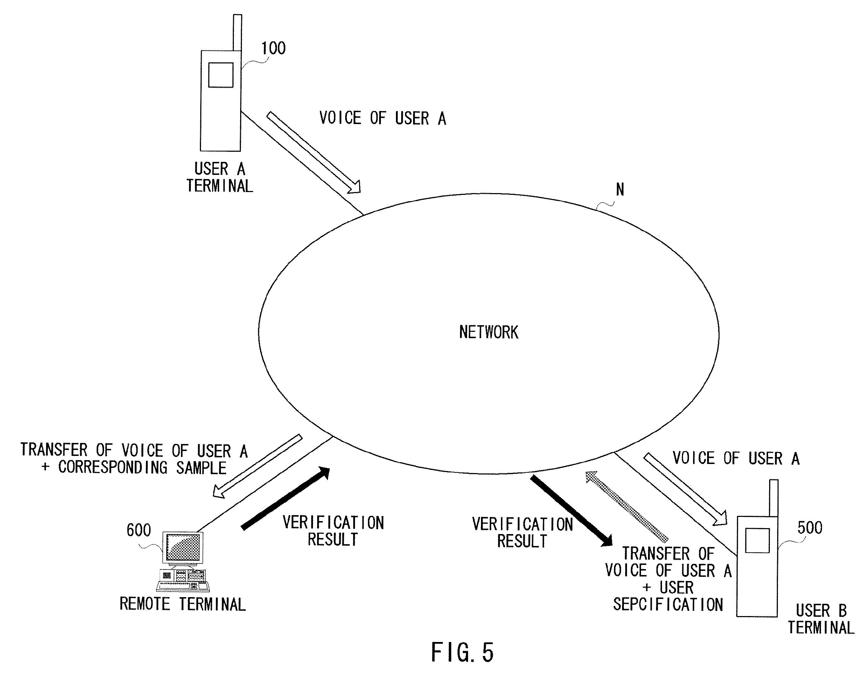

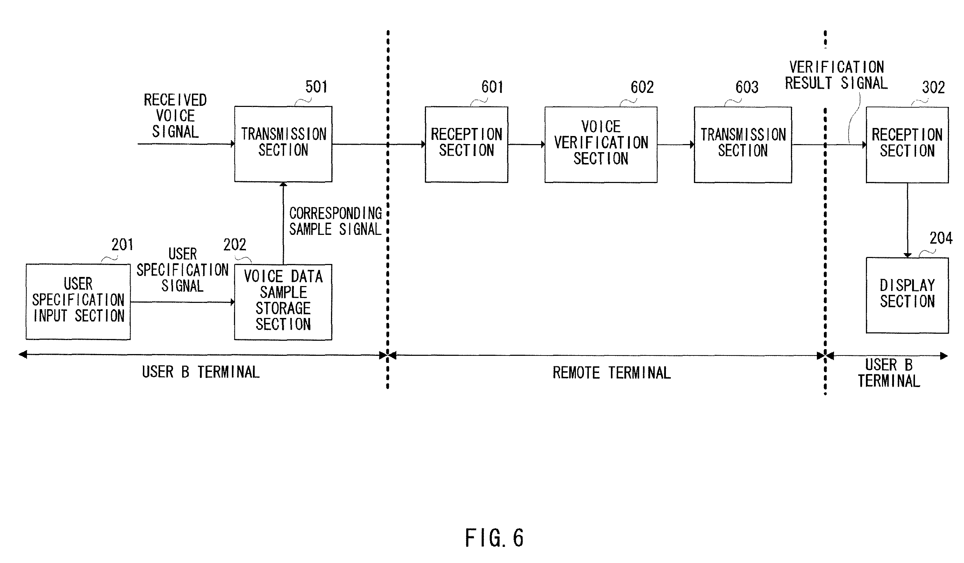

This Embodiment 3 will explain a case where the voice authentication system using the present invention is applied to a mobile telephone system. FIG.5 shows the system configuration of a mobile telephone system according to this Embodiment 3, and FIG. 6 is a block diagram showing a voice authentication function mounted on a mobile telephone apparatus and remote terminal apparatus.

The mobile telephone system in FIG.5 shows a case where mobile telephone apparatus 100 of user A on the transmitting side, mobile telephone apparatus 500 of user B on the receiving side and remote terminal apparatus 600 are connected via network N. In this case, the configuration of a radio base station or the like necessary for the mobile telephone system is omitted.

FIG.6 is a block diagram mainly showing the voice authentication function mounted on mobile telephone apparatus 500 and remote terminal apparatus 600 and the same components as those of mobile telephone apparatus 200, 400 shown in FIG.2 and FIG.4 are assigned the same reference numerals and explanations thereof will be omitted. Mobile telephone apparatus 500 is mainly configured with user specification input section 201, voice data sample storage section 202, transmission section 501, reception section 302 and display section 204. Remote terminal apparatus 600 is mainly configured with reception section 601, voice verification section 602 and transmission section 603. In addition, in mobile telephone apparatus 500 and remote terminal apparatus 600, when communication is performed between mobile telephone apparatus 500 and remote terminal apparatus 600, suppose that a key for encrypting and decrypting information to be transmitted/received is stored in transmission section 501 and reception section 302, and reception section 601 and transmission section 603 respectively.

When a received voice signal received by reception section 302 from mobile telephone apparatus 100 of user A is inputted and a corresponding sample signal of the voice of user A is inputted from voice data sample storage section 202, transmission section 501 of mobile telephone apparatus 500 encrypts the signals using the above described key and transmits the encrypted signals as an encrypted file to remote terminal apparatus 600 via network N.

Reception section 601 of remote terminal apparatus 600 receives the encrypted file (including the received voice signal and corresponding sample signal) transmitted from mobile telephone apparatus 500 of user B via network N, decrypts the received voice signal and corresponding sample signal from the encrypted file using the above described key and outputs the decrypted signals to voice verification section 602. Voice verification section 602 verifies the received voice signal against the corresponding sample signal inputted from reception section 601 and outputs the verification result as a verification result signal to transmission section 603. Voice verification section 602 verifies the waveform characteristic or the like of the received voice signal against the corresponding sample signal and outputs a verification result signal (e.g., OK, NG) indicating whether the communicating party is the person himself/herself or not according to the degree of similarity to transmission section 603. Transmission section 603 encrypts the verification result signal inputted from voice verification section 602 using the above described key and transmits the encrypted signal as an encrypted file to mobile telephone apparatus 500 via network N.

In the above described configuration of the mobile telephone system, remote terminal apparatus 600 is provided with the voice verification function for verifying the voice of the communicating party, and therefore it is possible to reliably perform personal authentication of the communicating party in a conversation between mobile telephone apparatus and prevent communication with ill-intentioned people and reliably prevent damages by spoofing or the like. Furthermore, the voice verification function is provided on the remote terminal apparatus side, and therefore it is possible to allow a plurality of mobile telephone apparatus users to share a voice verification application and facilitate upgrade or change of the voice verification function.

Furthermore, when communication is performed between mobile telephone apparatus 500 and remote terminal apparatus 600, information is encrypted when transmitted/received, and therefore it is possible to prevent the information content from leaking out to a third party and improve reliability of the mobile telephone system. Furthermore, when the voice verification result is "NG", information about user A (including, for example, name and telephone number registered in a telephone directory) and alarm information including the fact that user A is not the person himself/herself may be automatically reported to an external security organization such as the police or a security company registered in remote terminal apparatus 600 using the voice verification result "NG" as a trigger. In this case, it is possible to make use of the mobile telephone system for crime prevention and further improve the reliability of the mobile telephone system. Furthermore, when the voice verification result is "NG", if the conversation with the communicating party is automatically recorded in the mobile telephone apparatus, it is possible to easily use the recorded content as evidence when the conversation is a criminal act.

### (Embodiment 4)

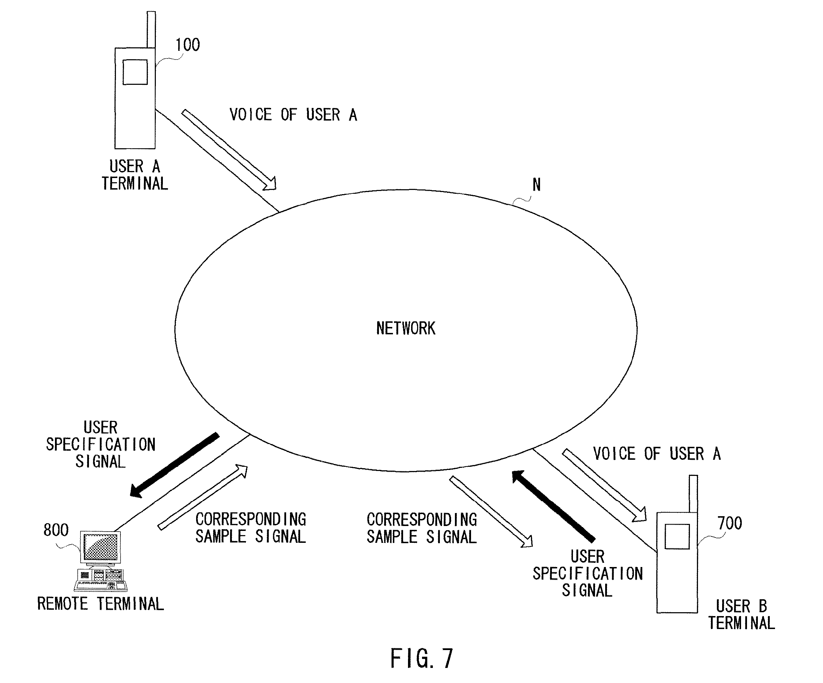

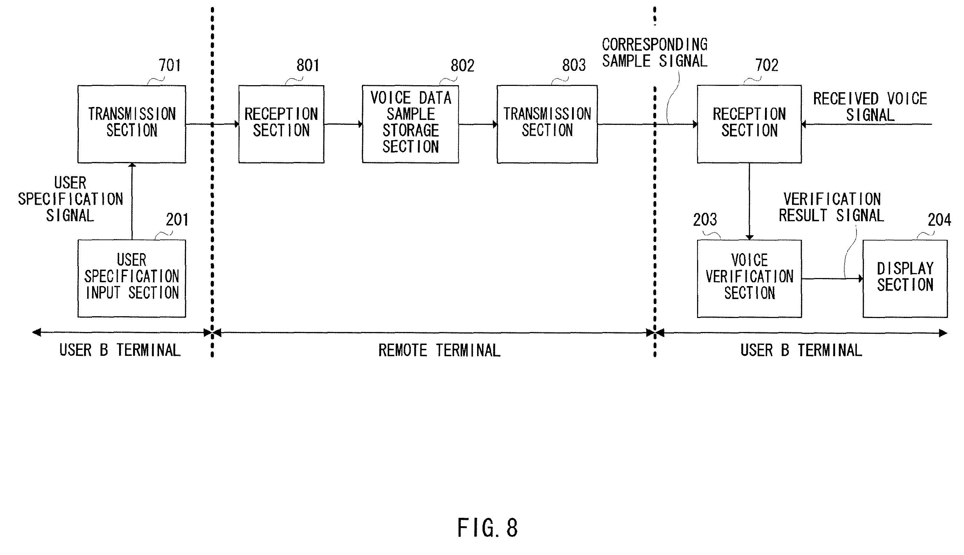

This Embodiment 4 will explain a case where the voice authentication system of the present invention is applied to a mobile telephone system. FIG.7 shows the system configuration of a mobile telephone system according to this Embodiment 4, and FIG.8 is a block diagram showing a voice authentication function mounted on a mobile telephone apparatus and remote terminal apparatus.

The mobile telephone system in FIG.7 shows a case where mobile telephone apparatus 100 of user A on the transmitting side, mobile telephone apparatus 700 of user B on the receiving side and remote terminal apparatus 800 are connected via network N. In this case, the configuration of a radio base station or the like necessary for the mobile telephone system is omitted.

FIG.7 is a block diagram mainly showing the voice authentication function mounted on mobile telephone apparatus 700 and remote terminal apparatus 800, and the same components as those of mobile telephone apparatus 200, 400 shown in FIG.2 and FIG.4 are assigned the same reference numerals and explanations thereof will be omitted. Mobile telephone apparatus 700 is mainly configured with user specification input section 201, voice verification section 203, transmission section 701, reception section 702 and display section 204. Remote terminal apparatus 800 is mainly configured with reception section 801, voice data sample storage section 802, transmission section 803. In addition, in mobile telephone apparatus 700 and remote terminal apparatus 800, when communication is performed between mobile telephone apparatus 700 and remote terminal apparatus 800, suppose that a key for encrypting and decrypting information to be transmitted/received is stored in transmission section 701 and reception section 702, and reception section 801 and transmission section 803, respectively.

Transmission section 701 of mobile telephone apparatus 700 encrypts a user specification signal inputted from user specification input section 201 using the above described key and transmits the encrypted signal as an encrypted file to remote terminal apparatus 800 via network N.

Reception section 801 of remote terminal apparatus 800 receives the encrypted file (including the user specification signal) transmitted from mobile telephone apparatus 700 of user B via network N, decrypts the user specification signal from the encrypted file using the above described key and outputs the decrypted signal to voice data sample storage section 802. Voice data sample storage section 802 reads the voice sample data corresponding to user A according to the user specification signal (including, for example, name and registered number registered in a telephone directory) inputted from reception section 801 and outputs the voice data sample to transmission section 803 as a corresponding sample signal. Transmission section 803 encrypts the corresponding sample signal inputted from voice data sample storage section 802 using the above described key and transmits the encrypted signal as an encrypted file to mobile telephone apparatus 700 via network N.

Reception section 702 of mobile telephone apparatus 700 receives the voice signal transmitted from mobile telephone apparatus 100 of user A via network N and outputs the received voice signal to voice verification section 203. Furthermore, reception section 702 receives the encrypted file (including the corresponding sample signal of user A) transmitted from remote terminal apparatus 800 via network N, decrypts the corresponding sample signal from the encrypted file using the above described key and outputs the decrypted signal to voice verification section 203.

In the above described configuration of the mobile telephone system, remote terminal apparatus 800 is provided with the voice data sample storage function for storing a voice sample of the communicating party, and mobile telephone apparatus 700 is provided with the voice recognition function for recognizing whether the voice of the communicating party is the voice of the person himself/herself or not, and therefore it is possible to reliably perform personal authentication of the communicating party in a conversation between the mobile telephone apparatus and prevent communication with ill-intentioned people and reliably prevent damages by spoofing or the like.

Furthermore, since the voice data sample storage function is provided on the remote terminal apparatus side, it is possible to allow a plurality of mobile telephone apparatus users to share the voice sample storage function, and thereby making it possible to omit a memory for storing the voice sample on the mobile telephone apparatus side and reduce the memory capacity mounted on the mobile telephone apparatus.

Furthermore, when communication is performed between mobile telephone apparatus 700 and remote terminal apparatus 800, information is encrypted when transmitted/received, and therefore it is possible to prevent the information content from leaking out to a third party and improve reliability of the mobile telephone system. Furthermore, when the voice verification result is "NG", information about user A (including, for example, name and telephone number registered in a telephone directory) and alarm information including the fact that user A is not the person himself/herself may be automatically reported to an external security organization such as the police or a security company registered in remote terminal apparatus 800 using the voice verification result "NG" as a trigger. In this case, it is possible to make use of the mobile telephone system for crime prevention and further improve the reliability of the mobile telephone system. Furthermore, when the voice verification result is "NG", if the conversation with the communicating party is automatically recorded in the mobile telephone apparatus, it is possible to easily use the recorded content as evidence when the conversation is a criminal act.

A first aspect of the voice authentication apparatus of the present invention is a voice authentication apparatus mounted on a communication terminal apparatus having a storage section that stores a voice sample for each of a plurality of communicating parties, a specification section that specifies the communicating party of an incoming call, a verification section that reads the voice sample of the communicating party specified by the specification section from the storage section, verifies a received voice of the communicating party against the voice sample and outputs the verification result and a reporting section that reports the verification result outputted from the verification section.

According to this configuration, it is possible to reliably perform personal identification based on the communicating party' s voice of the incoming call between communication terminal apparatus and thereby prevent communication with ill-intentioned people.

A second aspect of the voice authentication apparatus of the present invention is a voice authentication system configured with a communication terminal apparatus and a remote terminal apparatus, the communication terminal apparatus having a specification section that specifies the communicating party of an incoming call, a transmission section that transmits information about the communicating party specified by the specification section and a received voice of the communicating party to the remote terminal apparatus, and a reporting section that receives and reports a verification result of the communicating party transmitted from the remote terminal apparatus, and the remote terminal apparatus having a storage section that stores a voice sample for each of a plurality of communicating parties, a reception section that receives information about the communicating party transmitted from the communication terminal apparatus and a received voice of the communicating party, a verification section that reads a corresponding voice sample of the communicating party from the storage section according to the information about the communicating party received by the reception section, verifies the received voice of the communicating party against the voice sample and outputs the verification result, and a transmission section that transmits the verification result outputted from the verification section to the communication terminal apparatus.

According to this configuration, it is possible to reliably perform personal identification based on the communicating party' s voice of the incoming call between communication terminal apparatus and prevent communication with ill-intentioned people. Furthermore, since the voice sample and voice verification function are provided on the remote terminal apparatus side, it is possible to facilitate upgrade of the voice verification function and storage of the voice sample and also maintain reduction in size and weight of the communication terminal apparatus without substantially using resources of the communication terminal apparatus.

A third aspect of the voice authentication apparatus of the present invention is a voice authentication system configured with a communication terminal apparatus and a remote terminal apparatus, the communication terminal apparatus having a storage section that stores a voice sample for each of a plurality of communicating parties, a specification section that specifies the communicating party of an incoming call, a transmission section that reads the voice sample of the communicating party specified by the specification section from the storage section and transmits the voice sample together with a received voice of the communicating party to the remote terminal apparatus, and a reporting section that receives and reports a verification result of the communicating party transmitted from the remote terminal apparatus, and the remote terminal apparatus having a reception section that receives the voice sample of the communicating party transmitted from the communication terminal apparatus and a received voice of the communicating party, a verification section that verifies the received voice of the communicating party against the voice sample of the communicating party received from the reception section and outputs the verification result, and a transmission section that transmits the verification result outputted from the verification section to the communication terminal apparatus.

According to this configuration, it is possible to reliably perform personal identification based on the communicating party' s voice of the incoming call between communication terminal apparatus and prevent communication withill-intentioned people. Furthermore, since the voice verification function is provided on the remote terminal apparatus side, it is possible to allow a plurality of communication terminal apparatus users to share the voice verification application and facilitate upgrade and change of the voice verification function.

A fourth aspect of the voice authentication system of the present invention is a voice authentication system configured with a communication terminal apparatus and a remote terminal apparatus, the communication terminal apparatus having a specification section that specifies the communicating party of an incoming call, a transmission section that transmits information about the communicating party to the remote terminal apparatus, a reception section that receives a voice sample of the communicating party transmitted from the remote terminal apparatus according to the transmitted information about the communicating party, a verification section that verifies a received voice of the communicating party against the voice sample of the communicating party received by the reception section and outputs the verification result, and a reporting section that reports the verification result outputted from the verification section, and the remote terminal apparatus having a storage section that stores a voice sample for each of a plurality of communicating parties, a reception section that receives information about the communicating party transmitted from the communication terminal apparatus, and a transmission section that reads the voice sample of the communicating party corresponding to the received information about the communicating party from the storage section and transmits the voice sample to the communication terminal apparatus.

According to this configuration, it is possible to reliably perform personal identification based on the communicating party's voice of the incoming call between communication terminal apparatus and prevent communication withill-intentioned people. Furthermore, since the voice data sample storage function is provided on the remote terminal apparatus side, it is possible to allow a plurality of communication terminal apparatus users to share the voice sample storage function, and thereby making it possible to omit a memory for storing the voice sample on the communication terminal apparatus side and reduce the memory capacity mounted on the communication terminal apparatus.

A fifth aspect of the voice authentication system of the present invention is the voice authentication system according to the second aspect of the present invention, wherein the transmission section of the communication terminal apparatus encrypts the information to be transmitted to the remote terminal apparatus, the reporting section decrypts the encrypted information received from the remote terminal apparatus, and the reception section of the remote terminal apparatus decrypts the encrypted information received from the remote terminal apparatus and the transmission section encrypts information to be transmitted to the communication terminal apparatus.

According to this configuration, it is possible to prevent information content from leaking out to a third party and improve reliability of the communication system applying the voice authentication system.

A sixth aspect of the voice authentication system of the present invention is the voice authentication system according to the second aspect of the present invention, wherein in the remote terminal apparatus, when the voice sample of the communicating party does not match the received voice sample as the verification result outputted from the verification section, the transmission section reports alarm information indicating that the communicating party is not the person himself/herself to an external security organization.

According to this configuration, it is possible to make use of the voice authentication system for crime prevention and further improve reliability of the communication system applying the voice authentication system.

A seventh aspect of the voice authentication system of the present invention is the voice authentication system according to the second aspect of the present invention, wherein in the communication terminal apparatus, when the voice sample of the communicating party does not match the received voice sample as the verification result outputted from the verification section, the reception section starts recording a conversation with the communicating party.

According to this configuration, it is possible to easily use the recorded content as evidence when a conversation is a criminal act.

An eighth aspect of the voice authentication method of the present invention is a voice authentication method for authenticating a communicating party's voice of an incoming call at a communication terminal apparatus, having a storing step of storing a voice sample for each of a plurality of communicating parties in a storage section, a specifying step of specifying the communicating party of the incoming call, a verifying step of reading the voice sample of the specified communicating party from the storage section, verifying a received voice of the communicating party against the voice sample and outputting the verification result, and a reporting step of reporting the verification result.

According to this method, it is possible to reliably perform personal identification based on the communicating party' s voice of the incoming call between communication terminal apparatus and prevent communication with ill-intentioned people.

A ninth aspect of the voice authentication method of the present invention is a voice authentication method for authenticating a communicating party's voice of an incoming call at a communication terminal apparatus in a communication system configured with the communication terminal apparatus and a remote terminal apparatus, the communication terminal apparatus having a specifying step of specifying the communicating party of the incoming call, a transmitting step of transmitting information about the specified communicating party and a received voice of the communicating party to the remote terminal apparatus and a reporting step of receiving and reporting a verification result of the communicating party transmitted from the remote terminal apparatus, and the remote terminal apparatus having a storing step of storing a voice sample for each of a plurality of communicating parties in a storage section, a receiving step of receiving information about the communicating party transmitted from the communication terminal apparatus and a received voice of the communicating party, a verifying step of reading a corresponding voice sample of the communicating party from the storage section according to the received information about the communicating party, verifying the received voice of the communicating party against the voice sample and outputting the verification result, and a transmitting step of transmitting the verification result to the communication terminal apparatus.

According to this method, it is possible to reliably perform personal identification based on the communicating party's voice of the incoming call between communication terminal apparatus and prevent communication with ill-intentioned people. Furthermore, since the voice samples and voice verification function are provided on the remote terminal apparatus side, it is possible to facilitate upgrade of the voice verification function and storage of the voice sample and also maintain reduction in size and weight of the communication terminal apparatus without substantially using resources of the communication terminal apparatus.

A tenth aspect of the voice authentication method of the present invention is a voice authentication method for authenticating a communicating party's voice of an incoming call at a communication terminal apparatus in a communication system configured with the communication terminal apparatus and a remote terminal apparatus, the communication terminal apparatus having a storing step of storing a voice sample for each of a plurality of communicating parties in a storage section, a specifying step of specifying the communicating party of the incoming call, a transmitting step of reading the voice sample of the specified communicating party from the storage section and transmitting the voice sample together with a received voice of the communicating party to the remote terminal apparatus and a reporting step of receiving and reporting a verification result of the communicating party transmitted from the remote terminal apparatus, and the remote terminal apparatus having a receiving step of receiving a voice sample of the communicating party transmitted from the communication terminal apparatus and a received voice of the communicating party, a verifying step of verifying the received voice of the communicating party against the received voice sample of the communicating party and outputting the verification result, and a transmitting step of transmitting the verification result to the communication terminal apparatus.

According to this method, it is possible to reliably perform personal identification based on the communicating party' s voice of the incoming call between communication terminal apparatus and prevent communication with ill-intentioned people. Furthermore, since the voice verification function is provided on the remote terminal apparatus side, it is possible to allow a plurality of communication terminal apparatus users to share a voice verification application and facilitate upgrade and change of the voice verification function.

An eleventh aspect of the voice authentication method of the present invention is a voice authentication method for authenticating a communicating party' s voice of an incoming call at a communication terminal apparatus in a communication system configured with the communication terminal apparatus and a remote terminal apparatus, the communication terminal apparatus having a specifying step of specifying the communicating party of the incoming call, a transmitting step of transmitting information about the communicating party to the remote terminal apparatus, a receiving step of receiving a voice sample of the communicating party transmitted from the remote terminal apparatus according to the transmitted information about the communicating party, a verifying step of verifying a received voice of the communicating party against the received voice sample of the communicating party and outputting the verification result and a reporting step of reporting the verification result, and the remote terminal apparatus having a storing step of storing a voice sample for each of a plurality of communicating parties in a storage section, a receiving step of receiving information about the communicating party transmitted from the communication terminal apparatus and a transmitting step of reading the voice sample of the communicating party corresponding to the received information about the communicating party and transmitting the voice sample to the communication terminal apparatus.

According to this method, it is possible to reliably perform personal identification based on the communicating party's voice between communication terminal apparatus and prevent communication with ill-intentioned people. Furthermore, since the voice data sample storage function is provided on the remote terminal apparatus side, it is possible to allow a plurality of communication terminal apparatus users to share the voice sample storage function and thereby making it possible to omit a memory for storing the voice sample on the communication terminal apparatus side and reduce the memory capacity mounted on the communication terminal apparatus.

The present application is based on Japanese Patent Application No.2003-424629, filed on December 22, 2003, the entire content of which is expressly incorporated by reference herein.

### Industrial Applicability

The present invention is intended to reliably perform personal identification based on a communicating party' s voice of an incoming call in a conversation between communication terminal apparatus and prevent communication with ill-intentioned people.

## Claims

1. A voice authentication apparatus mounted on a communication terminal apparatus comprising:
a storage section that stores a voice sample for each of a plurality of communicating parties;
a specification section that specifies a communicating party of an incoming call;
a verification section that reads the voice sample of the communicating party specified by said specification section from said storage section, verifies a received voice of the communicating party against the voice sample and outputs a verification result; and
a reporting section that reports the verification result outputted from said verification section.

2. A voice authentication system configured with a communication terminal apparatus and a remote terminal apparatus, said communication terminal apparatus comprising:
a specification section that specifies a communicating party of an incoming call;
a transmission section that transmits information about the communicating party specified by said specification section and a received voice of the communicating party, to said remote terminal apparatus; and
a reporting section that receives and reports a verification result of the communicating party transmitted from said remote terminal apparatus, and said remote terminal apparatus comprising:
a storage section that stores a voice sample for each of a plurality of communicating parties;
a reception section that receives information about the communicating party transmitted from said communication terminal apparatus and a received voice of the communicating party;
a verification section that reads a corresponding voice sample of the communicating party from said storage section according to the information about the communicating party received by said reception section, verifies the received voice of the communicating party against the voice sample and outputs the verification result; and
a transmission section that transmits the verification result outputted from said verification section to said communication terminal apparatus.

3. A voice authentication system configured with a communication terminal apparatus and a remote terminal apparatus, said communication terminal apparatus comprising:
a storage section that stores a voice sample for each of a plurality of communicating parties;
a specification section that specifies a communicating party of an incoming call;
a transmission section that reads the voice sample of the communicating party specified by said specification section from said storage section and transmits the voice sample together with a received voice of the communicating party, to said remote terminal apparatus; and
a reporting section that receives and reports a verification result of the communicating party transmitted from said remote terminal apparatus, and said remote terminal apparatus comprising:
a reception section that receives the voice sample of the communicating party transmitted from said communication terminal apparatus and the received voice of the communicating party;
a verification section that verifies the received voice of the communicating party against the voice sample of the communicating party received from said reception section and outputs a verification result; and
a transmission section that transmits the verification result outputted from said verification section to said communication terminal apparatus.

4. A voice authentication system configured with a communication terminal apparatus and a remote terminal apparatus, said communication terminal apparatus comprising:
a specification section that specifies a communicating party of an incoming call;
a transmission section that transmits information about the communicating party to said remote terminal apparatus;
a reception section that receives a voice sample of the communicating party transmitted from said remote terminal apparatus according to the transmitted information about the communicating party;
a verification section that verifies a received voice of the communicating party against the voice sample of the communicating party received by said reception section and outputs a verification result; and
a reporting section that reports the verification result outputted from said verification section, and said remote terminal apparatus comprising:
a storage section that stores a voice sample for each of a plurality of communicating parties;
a reception section that receives information about the communicating party transmitted from said communication terminal apparatus; and
a transmission section that reads the voice sample of the communicating party corresponding to the received information about the communicating party from said storage section and transmits the voice sample, to said communication terminal apparatus.

5. The voice authentication system according to claim 2, wherein:
said transmission section of said communication terminal apparatus encrypts the information to be transmitted to said remote terminal apparatus;
said reporting section decrypts the encrypted information received from said remote terminal apparatus;
said reception section of said remote terminal apparatus decrypts the encrypted information received from said remote terminal apparatus; and
said transmission section encrypts the information to be transmitted to said communication terminal apparatus.

6. The voice authentication system according to claim 2, wherein, in said remote terminal apparatus, when the voice sample of the communicating party does not match the received voice sample as the verification result outputted from said verification section, said transmission section reports alarm information indicating that the communicating party is not the person himself/herself, to an external security organization.

7. The voice authentication system according to claim 2, wherein, in said communication terminal apparatus, when the voice sample of the communicating party does not match the received voice sample as the verification result outputted from said verification section, said reception section starts recording a conversation with the communicating party.

8. A voice authentication method for authenticating a voice of a communicating party of an incoming call at a communication terminal apparatus, the method comprising:
a storing step of storing a voice sample for each of a plurality of communicating parties in a storage section;
a specifying step of specifying the communicating party of the incoming call;
a verifying step of reading the voice sample of the specified communicating party from said storage section, verifying a received voice of the communicating party against the voice sample and outputting a verification result; and
a reporting step of reporting the verification result.

9. A voice authentication method for authenticating a voice of a communicating party of an incoming call at a communication terminal apparatus in a communication system configured with said communication terminal apparatus and a remote terminal apparatus, said communication terminal apparatus implementing:
a specifying step of specifying the communicating party of the incoming call;
a transmitting step of transmitting information about the specified communicating party and a received voice of the communicating party to said remote terminal apparatus; and
a reporting step of receiving and reporting a verification result of the communicating party transmitted from said remote terminal apparatus, and said remote terminal apparatus implementing:
a storing step of storing a voice sample for each of a plurality of communicating parties in a storage section;
a receiving step of receiving information about the communicating party transmitted from said communication terminal apparatus and a received voice of the communicating party;
a verifying step of reading a corresponding voice sample of the communicating party from said storage section according to the received information about the communicating party, verifying the received voice of the communicating party against the voice sample and outputting a verification result; and
a transmitting step of transmitting the verification result to said communication terminal apparatus.

10. A voice authentication method for authenticating a voice of a communicating party of an incoming call at a communication terminal apparatus in a communication system configured with said communication terminal apparatus and a remote terminal apparatus, said communication terminal apparatus implementing:
a storing step of storing a voice sample for each of a plurality of communicating parties in a storage section;
a specifying step of specifying the communicating party of the incoming call;
a transmitting step of reading the voice sample of the specified communicating party from said storage section and transmitting the voice sample together with a received voice of the communicating party to said remote terminal apparatus; and
a reporting step of receiving and reporting a verification result of the communicating party transmitted from said remote terminal apparatus, and said remote terminal apparatus implementing:
a receiving step of receiving a voice sample of the communicating party transmitted from said communication terminal apparatus and a received voice of the communicating party;
a verifying step of verifying the received voice of the communicating party against the received voice sample of the communicating party and outputting the verification result; and
a transmitting step of transmitting the verification result to said communication terminal apparatus.

11. A voice authentication method for authenticating a voice of a communicating party of an incoming call at a communication terminal apparatus in a communication system configured with said communication terminal apparatus and a remote terminal apparatus, said communication terminal apparatus implementing:
a specifying step of specifying the communicating party of the incoming call;
a transmitting step of transmitting information about the communicating party to said remote terminal apparatus;
a receiving step of receiving a voice sample of the communicating party transmitted from said remote terminal apparatus according to the transmitted information about the communicating party;
a verifying step of verifying a received voice of the communicating party against the received voice sample of the communicating party and outputting the verification result; and
a reporting step of reporting the verification result, and said remote terminal apparatus implementing:
a storing step of storing a voice sample for each of a plurality of communicating parties in a storage section;
a receiving step of receiving information about the communicating party transmitted from said communication terminal apparatus; and
a transmitting step of reading the voice sample of the communicating party corresponding to the received information about the communicating party and transmitting the voice sample to said communication terminal apparatus.
